# EUROPÄISCHE PATENTSCHRIFT

(11) **EP 1 147 466 B1**
(45) Veröffentlichungstag und Bekanntmachung des Hinweises auf die Patenterteilung: **20.08.2003**
(21) Anmeldenummer: 99966818.9
(22) Anmeldetag: 01.12.1999
(51) Int. Cl.: G06F 9/42, G06F 9/44

(54) **VERFAHREN ZUR ÄNDERUNG DES ABLAUFS EINES IN EINEM FESTWERTSPEICHER ABGELEGTEN PROGRAMMS**
METHOD FOR CHANGING THE FLOW OF A PROGRAM STORED IN A READ-ONLY MEMORY
PROCEDE POUR MODIFIER LE DEROULEMENT D'UN PROGRAMME STOCKE DANS UNE MEMOIRE MORTE

(30) Priorität: 15.12.1998 DE 19857921
(43) Veröffentlichungstag der Anmeldung: 24.10.2001
(73) Patentinhaber: Infineon Technologies AG, 81669 München (DE)
(72) Erfinder: WEBER, Michael, D-85354 Freising (DE); STEGER, Johann, D-81547 München (DE)
(74) Vertreter: Graf Lambsdorff, Matthias, Dr.
(86) Internationale Anmeldenummer: DE9903830
(87) Internationale Veröffentlichungsnummer: WO00036498

(56) Entgegenhaltungen:
- WO-A-94/27220
- GB-A- 2 231 419
- US-A- 5 790 860

## Beschreibung

Die Erfindung betrifft ein Verfahren zur Änderung des Ablaufs eines in einem Festwertspeicher abgelegten Programms nach dem Oberbegriff von Patentanspruch 1.

Viele integrierte Schaltungen, die einen Mikroprozessor und/oder einen Signalprozessor beinhalten, weisen einen Festwertspeicher (ROM = Read Only Memory) für Programme des Mikroprozessors bzw. Signalprozessors (Firmware) auf. Beispielsweise werden bei einer integrierten Schaltung für ein Mobilfunk-Telefon nach dem GSM-Standard in Programmen für einen Signalprozessor Funktionen zur Sprachverarbeitung, Kanalkodierung und für Datendienste und in Programmen für einen Mikroprozessor zur Steuerung des Telefons realisiert. Für nachträgliche Änderungen der Programme muß mindestens eine Maske zur Produktion der integrierten Schaltung geändert werden und die integrierte Schaltung neu produziert werden. Insbesondere bei der Massenproduktion von integrierten Schaltungen ist dies aufwendig und teuer.

Aus US 5,493,674 ist beispielsweise bekannt, in einem Programm, das in einem Festwertspeicher abgelegt ist, an vorgegebenen Stellen Befehle einzufügen, die jeweils ein Unterprogramm (Patch-Correction-Program) aufrufen. Dabei ist das Unterprogramm in einem Schreib/Lese-Speicher (RAM = Random Access Memory) abgelegt und nachträglich änderbar.

Vorteilhaft ist dabei, daß nachträglich durch Änderung der im Schreib/Lese-Speicher abgelegten Unterprogramme der Ablauf des im Festwertspeicher abgelegten Programms beeinflußbar ist. Dazu wird der Schreib/Lese-Speicher mit den Unterprogrammen zur Korrektur des Festwertspeicher-Programms von Vorrichtungen, die nicht auf der integrierten Schaltung enthalten sind, geladen.

Nach Ausführung des Unterprogramms wird in das im Festwertspeicher abgelegte Programm zurückgesprungen.

Nachteilig ist jedoch, daß vom laufenden Programm immer in die Unterprogramme gesprungen wird. Ferner ist für jeden Befehl zum Aufruf eines Unterprogramms genau ein Unterprogramm vorgesehen, wodurch sich für die Unterprogramme unter Umständen ein großer Speicherplatzbedarf ergibt. Durch diese engen Rahmenbedingungen sind nachträgliche Änderungen des im Festwertspeicher abgelegten Programms nur bedingt möglich.

In der WO 94 27220 A wird ein Verfahren zur Änderung des Ablaufs eines in einem ROM-Speicher vorliegenden Programms beschrieben. Dabei werden zunächst alle Stellen in einem Objektfile gefunden, an denen Änderungen möglich wären. Dann wird dementsprechend eine erste Tabelle erzeugt und nach dem Vergleich zwischen ursprünglichem Objektcode und geändertem Objektcode wird eine weitere Tabelle (Symbol Table) erzeugt, die auf die Stellen verweist, nach denen ein geänderter Programmcode ablaufen soll.

Das der Erfindung zugrundeliegende technische Problem besteht daher darin, ein Verfahren zur Änderung des Ablaufs eines in einem Festwertspeicher abgelegten Programms anzugeben, bei dem sowohl nachträglich die Unterprogrammaufrufe beeinflußbar sind als auch der für die Unterprogramme benötigte Speicherplatzbedarf möglichst gering ist.

Dieses Problem wird von einem Verfahren zur Änderung des Ablaufs eines in einem Festwertspeicher abgelegten Programms mit den Merkmalen von Patentanspruch 1 gelöst. Vorteilhafte Ausgestaltungen der Erfindung ergeben sich aus den jeweiligen Unteransprüchen.

Die Erfindung betrifft ein Verfahren zur Änderung des Ablaufs eines in einem Festwertspeicher abgelegten Programms. Das Programm weist dazu eine Vielzahl von Programmroutinen auf und jeder Programmroutine ist ein Unterprogramm, das in einem ersten Schreib/Lese-Speicher abgelegt ist, zuordenbar. Demnach kann jeder Programmroutine ein eigenes Unterprogramm, mehreren Programmroutinen ein gemeinsames Unterprogramm oder keiner Programmroutine ein Unterprogramm zugeordnet sein. Nur wenn das im Festwertspeicher abgelegte Programm fehlerfrei ist, wird dabei keiner Programmroutine ein Unterprogramm zugeordnet sein. Jeder Programmroutine sind weiterhin Speicherstellen eines zweiten Schreib/Lese-Speichers zugeordnet. Eine Programmroutine ruft dann, falls dieser Programmroutine ein Unterprogramm zugeordnet ist, das Unterprogramm abhängig vom Inhalt der zugeordneten Speicherstellen auf. Durch die einer Programmroutine zugeordneten Speicherstellen kann somit ein Unterprogrammaufruf beeinflußt werden. Der Vorteil dieses Verfahrens besteht darin, daß die Unterprogramme bedingt aufgerufen werden. Vorteilhaft ist dabei zudem, daß die Bedingung zum Aufrufen eines Unterprogramms durch die Belegung der Speicherstellen, die einer Programmroutine zugeordnet sind, jederzeit durch Umprogrammierung nachträglich geändert werden kann. Diese Verfahren zeichnet sich gegenüber bekannten Verfahren durch seine Vielseitigkeit aus.

In einer bevorzugten Ausführungsform übergibt jede Programmroutine beim Aufruf des ihr zugeordneten Unterprogramms mindestens einen Parameter an das Unterprogramm. Vorteilhafterweise wird dadurch das Verfahren noch vielseitiger, da das Unterprogramm in Abhängigkeit von dem übergebenen Parameter unterschiedliche Funktionen ausführen kann.

Die einer Programmroutine zugeordneten Speicherstellen sind in einer besonders bevorzugten Ausführungsform ausschließlich dieser Programmroutine zugeordnet. Diese Ausführungsform wird verwendet, wenn der Speicherplatzbedarf des zweiten Schreib/Lese-Speichers unerheblich ist. Von Vorteil ist dabei die große Vielseitigkeit beim Aufruf der Unterpogramme, da für jede Programmroutine durch entsprechende Belegung der zugeordneten Speicherstellen festgelegt werden kann, ob das zugeordnete Unterprogramm aufgerufen werden soll. In einer dazu alternativen besonders bevorzugten Ausführungsform sind die einer Programmroutine zugeordneten Speicherstellen auch allen anderen Programmroutinen zugeordnet. Hier wird vorteilhafterweise im zweiten Schreib/Lese-Speicher sehr wenig Speicherplatz benötigt, da allen Programmroutinen dieselben Speicherstellen zugeordnet sind. Es kann jedoch hierbei nur für alle Programmroutinen gleichermaßen durch entsprechende Belegung der zugeordneten Speicherstellen festgelegt werden, ob das jeweils einer Programmroutine zugeordnete Unterprogramm aufgerufen werden soll.

In einer besonders bevorzugten Ausführungsform wird durch den Parameter dem Unterprogramm die aufrufende Programmroutine mitgeteilt und davon abhängig die Funktion des Unterprogramms beeinflußt.

Weitere Vorteile, Merkmale und Anwendungsmöglichkeiten der Erfindung ergeben sich aus der nachfolgenden Beschreibung eines Ausführungsbeispiels in Verbindung mit der Zeichnung. In der Zeichnung zeigt
- Figur 1: ein Ausführungsbeispiel der Erfindung; und
- Figur 2: ein Ausführungsbeispiel einer Belegung des ersten und zweiten Schreib/Lese-Speichers.

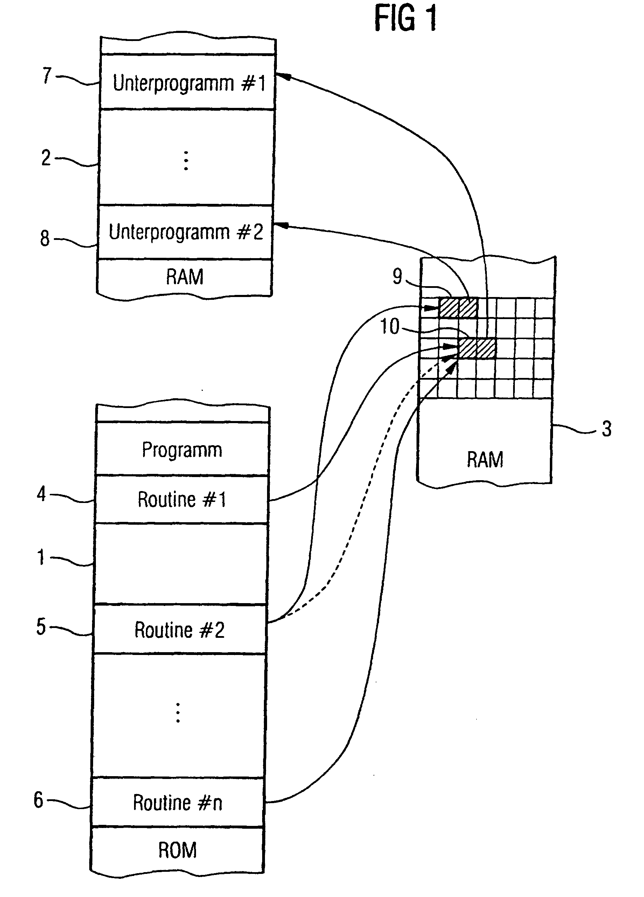

In Figur 1 ist ein Festwertspeicher 1 dargestellt, in dem ein Programm abgelegt ist. Das Programm weist eine Vielzahl von Programmroutinen (im folgenden Routinen genannt) auf, wobei in Figur 1 nur drei Routinen 4, 5 und 6 skizziert sind. Durch Punkte und die Bezeichnung der Routinen mit Routine #1 bis Routine #n ist angedeutet, daß mehr als drei Routinen im Festwertspeicher 1 abgelegt sein können. Diese Routinen sind in das Programm in bestimmten vorgegebenen Adreßabständen "eingebaut". Wichtig ist dabei, daß die Routinen über den gesamten Adreßbereich des Programms "gleichmäßig verstreut" liegen, um jeden Teil des Programms nachträglich änderbar zu machen. Sind beispielsweise nur Routinen im niedrigen Adreßbereich des Programms vorhanden, kann vom höheren Adreßbereich des Programms nicht mehr in Unterprogramme gesprungen werden und demnach in diesem Adreßbereich auch keine Korrekturen mehr durchführen. Da die Routinen 4, 5 und 6 im Festwertspeicher 1 abgelegt sind, ist eine nachträgliche Änderung der Routinen selbst nicht mehr möglich.

Jeder der Routinen 4 bis 6 ist ein Unterprogramm 7 bis 8 zugeordnet. Die Unterprogramme sind dabei in einem ersten Schreib/Lese-Speicher 2 abgelegt und können jederzeit nachträglich geändert werden. Der erste Schreib/Lese-Speicher 2 liegt in demselben Adreßraum wie der Festwertspeicher 1, in dem das Programm abgelegt ist. Das bedeutet, daß sowohl der erste Schreib/Lese-Speicher 2 als auch der Festwertspeicher 1 über denselben Adreßbus und Datenbus angesteuert werden und im Programmspeicherbereich liegen. Dabei kann beispielsweise der erste Schreib/Lese-Speicher 2 den Adreßraum von Hex 0000 bis Hex 1FFF und der Festwertspeicher 1 den Adreßraum von Hex 2000 bis Hex FFFF belegen. Der Schreib/Lese-Speicher 1 kann in diesem Fall durch ein RAM mit 8192 Byte realisiert werden.

In einem zweiten Schreib/Lese-Speicher 3 sind jeder Routine jeweils mehrere Speicherstellen zugeordnet. Der zweite Schreib/Lese-Speicher 3 liegt in einem anderen Adreßraum als der Festwertspeicher 1 und der erste Schreib/Lese-Speicher 2. Beispielsweise kann der zweite Schreib/Lese-Speicher 3 im Adreßraum eines Datenspeichers liegen. In Figur 1 ist dargestellt, daß der Routine 4 und 6 dieselben Speicherstellen 10 zugeordnet sind, während der Routine 5 die Speicherstellen 9 zugeordnet sind. Die gestrichelte Linie zeigt, daß der Routine 5 auch die den Routinen 4 und 6 zugeordneten Speicherstellen 10 zugeordnet sein können. In diesem Fall sind allen Routinen 4 bis 6 dieselben Speicherstellen zugeordnet, wodurch der Speicherplatzbedarf im zweiten Schreib/Lese-Speicher 3 niedrig ist.

Bei der Zuordnung der Routinen zu den Unterprogrammen können drei verschiedene Fälle unterschieden werden, deren Vor- und Nachteile in der folgenden Tabelle verdeutlicht sind:

| | Zuordnung | Vorteile | Nachteile |
|---|---|---|---|
| 1 | ein Unterprogramm ist ausschließlich einer Routine zugeordnet: es gibt gleich viele Unterprogramme wie Routinen | Unterprogramm klein: es muß nur den Fall der aufrufenden Routine abhandeln | zweiter Scnreib/Lese-Speicher groß: Größe = "Anzahl der Unterprogramme" mal "pro Unterprogramm vorgesehene Speicherzellen" |
| 2 | ein Unterprogramm ist menreren Routinen zugeordnet: es gibt weniger Unterprogramme als Routinen | Unterprogramm mittelgroß: es muß den Fall mehrerer aufrufender Routinen abhandeln | zweiter Schreib/Lese-Speicner mittelgroß |
| 3 | ein Unterprogramm ist allen Routinen zugeordnet: es gibt eine Vielzahl von Routinen und ein Unterprogramm | Unterprogramm groß: es muß den Fall jeder aufrufenden Routine abhandeln | zweiter Schreib/Lese-Speicher klein |

Im ersten Fall wird zwar die größte Vielseitigkeit erreicht, allerdings auf Kosten eines großen Speicherplatzbedarfs im zweiten Schreib/Lese-Speicher.

Im zweiten Fall erreicht man einen Ausgleich zwischen dem Speicherplatzbedarf im zweiten Schreib/Lese-Speicher und im ersten Schreib/Lese-Speicher und der Vielseitigkeit, da mehreren Routinen dieselben Speicherstellen im zweiten Schreib/Lese-Speicher und ein Unterprogramm zugeordnet ist. Das Unterprogramm bedient mehrere aufrufende Routinen und wird dementsprechend aufwendiger als ein Unterprogramm, das nur eine Routine bedient. Zur Unterscheidung der aufrufenden Routinen werden Parameter an das Unterprogramm übergeben.

Im dritten Fall gibt es nur ein Unterprogramm, das alle Routinen bedient und dementsprechend groß und aufwendig ist. Dafür wird im zweiten Schreib/Lese-Speicher nur minimaler Speicherplatz benutzt.

Die Routinen 4 bis 6 weisen jeweils eine kurze Programmsequenz (Makro) auf, die aus dem zweiten Schreib/Lese-Speicher 3 Werte aus den der jeweiligen Routine zugeordneten Speicherzellen liest und mit einem vorgegebenen Wert vergleicht. Abhängig vom Ergebnis des Vergleichs ruft dann das Makro ein Unterprogramm auf, das in dem ersten Schreib/Lese-Speicher 2 abgelegt ist. Beim Aufruf des Unterprogramms wird ein Parameter an das Unterprogramm übergeben.

Ein Ausführungsbeispiel des Makros in einer Maschinensprache lautet beispielsweise folgendermaßen:

| | |
|---|---|
| *.MACRO* | *FW_HOOK_PAR HOOK_ID,HOOK_PAR* *mov [##HK_XS.mem + HOOK_ID], a0* *brr >%no_hook, eq* *mov #HOOK_PAR, a11* *call a01* |
| *%no hook:* *.ENDM* | |

(Aus dem zweiten Schreib/Lese-Speicher 3 wird der Inhalt der Adresse *[##HK_XS.mem + HOOK_ID]* in einen ersten Akkumulator *a0* gelesen. Ist der gelesene Wert gleich Null, so wird an das Ende des Makros mit *brr >%no_hook, eq* gesprungen. Ein Unterprogramm wird hierbei nicht aufgerufen. Andernfalls wird der Parameter *HOOK_PAR* in einen zweiten Akkumulator *a11* geschrieben und mit *call a01* das dem Makro zugeordnete Unterprogramm aufgerufen.)

Die in dem zweiten Schreib/Lese-Speicher 3 abgelegten Werte können den Startadressen der Unterprogramme entsprechen.

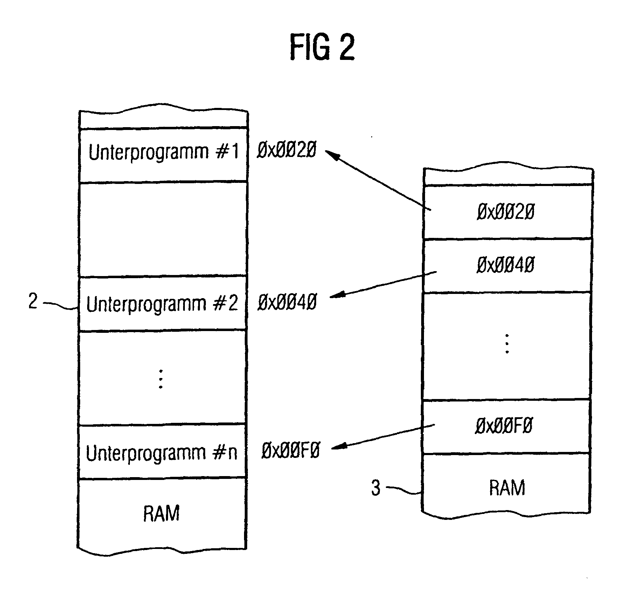

In Figur 2 sind im ersten Schreib/Lese-Speicher 2 die unteren Adressen Hex 0000 bis Hex 001F nicht mit Unterprogrammen belegt. Ein erstes Unterprogramm #1 beginnt bei der Adresse Hex 0020, ein zweites Unterprogramm #2 bei der Adresse Hex 0040 und ein letztes Unterprogramm #n bei der Adresse Hex 00F0.

Im zweiten Schreib/Lese-Speicher 3 sind direkt die Startadressen Hex 0020, Hex 0040 und Hex 00F0 der Unterprogramme abgelegt.

Eine Routine liest aus den zugeordneten Speicherstellen des zweiten Schreib/Lese-Speichers 3 die dort gespeicherte Adresse, vergleicht die Adresse mit Null und verwendet die Adresse, falls diese ungleich Null ist, direkt als Einsprungadresse in das im ersten Schreib/Lese-Speicher 2 abgelegte Unterprogramm.

Ist einer Routine kein Unterprogramm zugeordnet, wird in die zugeordneten Speicherzellen des zweiten Schreib/Lese-Speichers 3 einfach Hex 0000 abgelegt.

Beim Aufruf eines Unterprogramms können einer oder mehrere Parameter übergeben werden. Dies ist insbesondere vorteilhaft, wenn mehreren Programmroutinen dieselben Speicherstellen zugeordnet sind, in denen die Adresse eines Unterprogramms abgelegt ist, und das Unterprogramm eine der aufrufenden Programmroutine entsprechende Funktion ausführen soll. In diesem Fall muß das aufgerufene Unterprogramm die aufrufende Programmroutine erkennen. Das Unterprogramm wertet dazu den oder die übergebenen Parameter aus, wobei jeder Programmroutine, die das Unterprogramm aufrufen kann, ein bestimmter Parameterwert fest zugeordnet ist.

Vorteilhaft läßt sich das geschilderte Verfahren insbesondere bei Harvard-Architekturen, die vorwiegend bei digitalen Signalprozessoren (DSP = Digital Signal Processor) zum Einsatz kommen und getrennte Adreßräume für Programme und Daten aufweisen, anwenden.

## Patentansprüche

1. Verfahren zur Änderung des Ablaufs eines in einem Festwertspeicher abgelegten Programms, wobei das Programm eine Vielzahl von Programmroutinen (4 - 6) aufweist und wobei jeder Programmroutine (4 - 6) ein Unterprogramm (7, 8), das in einem ersten Schreib/Lese-Speicher (2) abgelegt ist, zuordenbar ist,
**dadurch gekennzeichnet, daß**
- jeder Programmroutine (4 - 6) Speicherstellen (9, 10) eines zweiten Schreib/Lese-Speichers (3) zugeordnet sind, und
- eine Programmroutine (4 - 6), falls dieser Programmroutine (4 - 6) ein Unterprogramm (7, 8) zugeordnet ist, das Unterprogramm (7, 8) abhängig vom Inhalt der zugeordneten Speicherstellen (9, 10) im zweiten Schreib/Lese-Speicher (3) aufruft.

2. Verfahren nach Anspruch 1,
**dadurch gekennzeichnet, daß**
jede Programmroutine (4 - 6) beim Aufruf des ihr zugeordneten Unterprogramms (7, 8) mindestens einen Parameter an das Unterprogramm (7, 8) übergibt.

3. Verfahren nach Anspruch 1 oder 2,
**dadurch gekennzeichnet, daß**
die einer Programmroutine (5) im zweiten Schreib/Lese-Speicher (3) zugeordneten Speicherstellen (9) ausschließlich dieser Programmroutine (5) zugeordnet sind.

4. Verfahren nach Anspruch 1 oder 2,
**dadurch gekennzeichnet, daß**
die einer Programmroutine (4) im zweiten Schreib/Lese-Speicher (3) zugeordneten Speicherstellen (10) auch allen anderen Programmrioutinen (5, 6) zugeordnet sind.

5. Verfahren nach einem der Ansprüche 2 bis 4,
**dadurch gekennzeichnet, daß**
durch den Parameter dem Unterprogramm (7, 8) die aufrufende Programmroutine (4 - 6) mitgeteilt wird und abhängig von dem Parameter die Funktion des Unterprogramms (7, 8) beeinflußt wird.

## Claims

1. Method for changing the execution of a program stored in a read only memory, where the program has a multiplicity of program routines (4 - 6) and where each program routine (4 - 6) can be allocated a subprogram (7, 8) which is stored in a first read/write memory (2),
**characterized in that**
- each program routine (4 - 6) has associated memory locations (9, 10) in a second read/write memory (3), and
- if a program routine (4 - 6) has an associated subprogram (7, 8), this program routine (4 - 6) calls the subprogram (7, 8) on the basis of the content of the associated memory locations (9, 10) in the second read/write memory (3).

2. Method according to Claim 1,
**characterized in that**,
when calling its associated subprogram (7, 8), each program routine (4 - 6) transfers at least one parameter to the subprogram (7, 8).

3. Method according to Claim 1 or 2,
**characterized in that**
the memory locations (9) associated with a program routine (5) in the second read/write memory (3) are associated exclusively with this program routine (5).

4. Method according to Claim 1 or 2,
**characterized in that**
the memory locations (10) associated with a program routine (4) in the second read/write memory (3) are also associated with all other program routines (5, 6).

5. Method according to one of Claims 2 to 4,
**characterized in that**
the parameter notifies the subprogram (7, 8) of the program routine (4 - 6) which is calling, and the operation of the subprogram (7, 8) is influenced on the basis of the parameter.

## Revendications

1. Procédé de modification de déroulement d'un programme stocké dans une mémoire morte, le programme comportant une pluralité de routines (4 à 6) de programme et à chaque routine (4 à 6) de programme peut être associé un sous-programme (7, 8) qui est stocké dans une première mémoire (2) d'écriture/lecture,
**caractérisé en ce que**
- à chaque routine (4 à 6) de programme sont associés des emplacements (9, 10) d'une deuxième mémoire (3) d'écriture/lecture et
- une routine (4 à 6) de programme "Appelle" dans une deuxième mémoire (3) d'écriture/lecture, dans le cas où il est associé à cette routine (4 à 6) de programme un sous-programme (7, 8), le sous-programme (7, 8) en fonction du contenu des emplacements (9, 10) de mémoire associées.

2. Procédé suivant la revendication 1, **caractérisé en ce que**
- chaque routine (4 à 6) de programme transmet, lors de l'appel du sous-programme (7, 8) qui lui est associé, au moins un paramètre au sous-programme (7, 8).

3. Procédé suivant la revendication 1 ou 2, **caractérisé en ce que** :
- les emplacements (9) de mémoire associés à une routine (5) de programme dans la deuxième mémoire (3) d'écriture/lecture sont associés exclusivement à cette routine (5) de programme.

4. Procédé suivant la revendication 1 ou 2, **caractérisé en ce que** :
- les emplacements (10) de mémoire associés à une routine (4) de programme dans la deuxième mémoire (3) d'écriture/lecture sont associés à toutes les autres routines (5, 6) de programme.

5. Procédé suivant l'une des revendications 2 à 4, **caractérisé en ce que** :
- par le paramètre il est communiqué au sous-programme (7, 8) de la routine (4 à 6) de programme qui appelle et le fonctionnement du sous-programme (7, 8) est influencé en fonction du paramètre.
